# EUROPEAN PATENT SPECIFICATION

(11) **EP 2 013 153 B1**
(45) Date of publication and mention of the grant of the patent: **30.12.2015**
(21) Application number: 06794646.7
(22) Date of filing: 04.10.2006
(51) Int. Cl.: C04B 18/16, C04B 20/00, C09K 8/467, C04B 28/02

(54) **METHODS OF USING LIGHTWEIGHT SETTABLE COMPOSITIONS COMPRISING CEMENT KILN DUST**
VERWENDUNGSVERFAHREN FÜR LEICHTE ZEMENTOFENSTAUB ENTHALTENDE ABBINDBARE ZUSAMMENSETZUNGEN
PROCÉDÉS D'UTILISATION DES COMPOSITIONS DURCISSABLES LÉGÈRES COMPRENANT DE LA POUSSIÈRE DE FOUR À CIMENT

(30) Priority: 03.05.2006 US 416563; 03.05.2006 US 416754
(43) Date of publication of application: 14.01.2009
(60) Divisional application: 12187033.1
(73) Proprietor: Halliburton Energy Services, Inc., Duncan, OK 73533 (US)
(72) Inventor: RODDY, Craig, W., Duncan, OK 73533 (US); CHATTERJI, Jiten, Duncan, OK 73533 (US); BRENNEIS, Darrell, Chad, Marlow, OK 73055 (US); KING, Bobby, J., Duncan, OK 73533 (US)
(74) Representative: Cottrill, Emily Elizabeth Helen
(86) International application number: PCT/GB2006/003694
(87) International publication number: WO 2007/128945

(56) References cited:
- EP-A- 1 348 831
- WO-A-2007//028951
- US-A- 5 352 288
- US-A1- 2002 073 897
- US-A1- 2004 187 740
- US-A1- 2005 098 317
- US-B1- 6 689 208
- US-B1- 7 077 203

## Description

### BACKGROUND

The present invention relates to cementing operations and, more particularly, to primary cementing a subterranean formation using a lightweight settable composition according to claim 1.

Settable compositions may be used in a variety of above ground (*e.g*., in the construction industry) and subterranean applications. As used herein, the term "settable composition" refers to any composition that over time will set to form a hardened mass. One example of a settable composition comprises hydraulic cement and water. Subterranean applications that may involve settable compositions include, but are not limited to, primary and remedial cementing. For example, settable compositions may be used in primary cementing operations whereby pipe strings, such as casing and liners, are cemented in well bores. In performing primary cementing, a settable composition may be pumped into an annular space between the subterranean formation and the pipe string disposed therein. The settable composition sets in the annular space, thereby forming an annular sheath of hardened cement (*e.g.,* a cement sheath) that supports and positions the pipe string in the well bore and bonds the exterior surface of the pipe string to the walls of the well bore. Settable compositions also are used in remedial cementing operations such as plugging highly permeable zones or fractures in well bores, plugging cracks and holes in pipe strings, and the like.

In some instances, settable compositions utilized in subterranean operations may be lightweight, for example, to prevent excessive hydrostatic pressure from being exerted on subterranean formations penetrated by the well bore, whereby the formations may be unintentionally fractured or the hole may collapse. One type of lightweight settable composition is a foamed cement composition, *e.g.*, a cement composition that comprises a surfactant and a gas. Additionally, lightweight additives (*e.g.*, microspheres) also may be added to settable compositions to reduce the density thereof.

During the manufacture of cement, a waste material commonly referred to as "CKD" is generated. "CKD," as that term is used herein, refers to a partially calcined kiln feed which is typically removed from the gas stream and collected in a dust collector during the manufacture of cement. Usually, large quantities of CKD are collected in the production of cement that are commonly disposed of as waste. Disposal of the waste CKD can add undesirable costs to the manufacture of the cement, as well as the environmental concerns associated with its disposal. The chemical analysis of CKD from various cement manufactures varies depending on a number of factors, including the particular kiln feed, the efficiencies of the cement production operation, and the associated dust collection systems. CKD generally may comprise a variety of oxides, such as SiO₂, Al₂O₃, Fe₂O₃, CaO, MgO, SO₃, Na₂O, and K₂O.

US 5,352,288 discloses low cost, acid-resistant, high early strength hydrothermally cured pozzolanic cement compositions, preferably ones that are also lightweight, which are capable of being used after being admixed with water to form building floors, walls, and the like and also processed into building materials from essentially indigenous industrial and/or biogeneric waste by-products.

US 2002/0073897 discloses a dry cementitious composition which when slurried with water produces an economical hydraulic cementitious slurry for closing abandoned wells. The dry cementitious component is a cement/CKD blend as the major component with a weight ratio of parts cement to parts of CKD between 2/3 and 3/1.

US 2005/0098317 discloses a process for forming cement in a well bore. In this process, a cement composition is formed that comprises a cement and one or more beads mixed with the cement. The cement composition containing the beads is displaced into the well bore, and an inert gas phase is introduced to the cement composition to control a density of the cement composition.

### SUMMARY

The present invention provides a method defined by claim 1.

According to the invention there is provided a method of primary cementing a subterranean formation that comprises providing a lightweight settable composition having a density of less than 13 pounds per gallon [about 1560 kg/m³], the lightweight settable composition comprising water, CKD, and microspheres, wherein the microspheres are present in the lightweight settable composition in an amount in the range of from 1% to 30% by weight of the lightweight settable composition; introducing the lightweight settable composition into an annulus between the subterranean formation and a pipe string located in the subterranean formation; and allowing the lightweight settable composition to set in the annulus.

The features and advantages of the present invention will be apparent to those skilled in the art.

### DESCRIPTION OF PREFERRED EMBODIMENTS

The lightweight settable compositions used in the method of the present invention is used in primary cementing.

A lightweight settable composition comprising water, CKD, and microspheres is described. The lightweight settable compositions used in the method of the present invention should have a density suitable for a particular application as desired by those of ordinary skill in the art, with the benefit of this disclosure. Lightweight settable compositions generally have a density of less than 13 pounds per gallon ("ppg") [about 1560 kg/m³]. In some embodiments, the lightweight settable compositions of the present invention may have a density in the range of from 4 ppg [about 479 kg/m³] to 13 ppg [about 1560 kg/m³]. In the some embodiments, the lightweight settable composition may be foamed to further reduce the density thereof, for example, in the range of from 4 ppg [about 479 kg/m³] to 11 ppg [about 1320 kg/m³].

The water used in the lightweight settable compositions according to the method of the present invention may include freshwater, saltwater (e.g., water containing one or more salts dissolved therein), brine (*e.g.*, saturated saltwater produced from subterranean formations), seawater, or combinations thereof. Generally, the water may be from any source, provided that it does not contain an excess of compounds that may adversely affect other components in the lightweight settable composition. In some embodiments, the water may be included in an amount sufficient to form a pumpable slurry. In some embodiments, the water may be included in the lightweight settable compositions of the present invention in an amount in the range of from 20% to 80% by weight of the lightweight settable composition. In some embodiments, the water may be included in an amount in the range of from 30% to 70% by weight of the lightweight settable composition:

The CKD should be included in the lightweight settable compositions in an amount sufficient to provide the desired compressive strength, density, and/or cost reduction. In some embodiments, the CKD may be present in the lightweight settable compositions according to the method of the present invention in an amount in the range of from 0.01% to 80% by weight of the lightweight settable composition. In some embodiments, the CKD may be present in the lightweight settable compositions according to the method of the present invention in an amount in the range of from 2.5% to 80% by weight of settable materials. In some embodiments, the CKD may be present in the lightweight settable compositions according to the method of the present invention in an amount in the range of from 2.5% to 60% by weight of the lightweight settable composition. In some embodiments, the CKD may be present in the lightweight settable compositions according to the method of the present invention in an amount in the range of from 5% to 50% by weight of the lightweight settable composition.

The microspheres used in the lightweight settable compositions according to the method of the present invention may be any microsphere suitable for use in subterranean applications to, *inter alia*, reduce the density of the settable composition. Suitable microspheres generally have a density of less than 8.345 ppg (1.0 gram per cubic centimeter ("g/cc")). A variety of microspheres may be utilized in accordance with the present invention, including hollow, solid, and/or porous microspheres. Generally, the microspheres should have a crush strength greater than 100 psi [about 690 kPa]. Suitable microspheres may comprise a variety of materials, including, but not limited to, microspheres that comprise glass, soda lime borosilicate glass, fly ash, ceramic, polystyrene, other polymeric materials, and mixtures thereof. In some embodiments of the lightweight settable compositions according to the method of the present invention, the microspheres are hollow, glass microspheres. In some embodiments, the microspheres may comprise a crosslinked polymeric material, such as polystyrene crosslinked with divinyl benzene (*e.g*., plastic beads). The microspheres may be obtained from any suitable source. Examples of suitable fly ash microspheres are commercially available from Halliburton Energy Services, Inc., Duncan, Oklahoma, under the tradename SPHERELITE^{™} microspheres. Suitable hollow, soda lime borosilicate glass microspheres include 3M^{™} SCOTCHLITE^{™} glass bubbles.

Generally, suitable microspheres have a size of less than 150 microns. In some embodiments, the microspheres have a size in the range of from 5 microns to 150 microns, alternatively from 20 microns to 105 microns, and alternatively from 15 microns to 80 microns.

The microspheres should be included in the lightweight settable compositions according to the method of the present invention in an amount sufficient such that the desired density of less than 13 ppg [1560 kg/m³] of the lightweight settable composition is achieved. The microspheres are present in the lightweight settable compositions according to the method of the present invention in an amount in the range of from 1% to 30% by weight of the lightweight settable composition. In some embodiments, the microspheres may be present in the lightweight settable compositions according to the method of the present invention in an amount in the range of from 3% to 25% by weight of the lightweight settable composition. In other embodiments, the microspheres may be present in the lightweight settable compositions according to the method of the present invention in an amount in the range of from 5% to 20% by weight of the lightweight settable composition.

The lightweight settable compositions of the present invention may optionally comprise a hydraulic cement. A variety of hydraulic cements may be utilized in accordance with the method the present invention, including, but not limited to, those comprising calcium, aluminum, silicon, oxygen, iron, and/or sulfur, which set and harden by reaction with water. Suitable hydraulic cements include, but are not limited to, Portland cements, pozzolana cements, gypsum cements, high alumina content cements, slag cements, silica cements, and combinations thereof. In certain embodiments, the hydraulic cement may comprise a Portland cement. In some embodiments, the Portland cements that are suited for use in the method of present invention are classified as Classes A, C, H, and G cements according to American Petroleum Institute, API Specification for Materials and Testing for Well Cements, API Specification 10, Fifth Ed., July 1, 1990.

Where present, the hydraulic cement generally may be included in the lightweight settable compositions used in the method the present invention in an amount sufficient to provide the desired compressive strength, density, and/or cost. In some embodiments, the hydraulic cement may be present in the lightweight settable compositions according to the method of the present invention in an amount up to 75% by weight of the lightweight settable composition. In some embodiments, the hydraulic cement may be present in the lightweight settable compositions according to the method of the present invention in an amount up to 70% by weight of the lightweight settable composition. In some embodiments, the hydraulic cement may be present in the lightweight settable compositions according to the method of the present invention in an amount in the range of from 10% to 70% by weight of the lightweight settable composition. In some embodiments, the hydraulic cement may be present in the lightweight settable compositions according to the method of the present invention in an amount in the range of from 20% to 65% by weight of the lightweight settable composition.

In some embodiments, a pozzolana cement that may be suitable for use comprises fly ash. "Fly ash," as that term is used herein, refers to the residue from the combustion of powdered or ground coal, wherein the fly ash carried by the flue gases may be recovered, for example, by electrostatic precipitation. A variety of fly ashes may be suitable, including fly ash classified as Class C and Class F fly ash according to American Petroleum Institute, API Specification for Materials and Testing for Well Cements, API Specification 10, Fifth Ed., July 1, 1990. Class C fly ash comprises both silica and lime so that, when mixed with water, it sets to form a hardened mass. Class F fly ash generally does not contain sufficient lime, so an additional source of calcium ions is required for the Class F fly ash to form a settable composition with water. In some embodiments, lime may be mixed with Class F fly ash in an amount in the range of from 15% to 25% by weight of the fly ash. In some instances, the lime may be hydrated lime. Suitable examples of fly ash include, but are not limited to, POZMIX^{®} A cement additive, commercially available from Halliburton Energy Services, Inc., Duncan, Oklahoma.

Where present, the fly ash generally may be included in the lightweight settable compositions according to the method of the present invention in an amount sufficient to provide the desired compressive strength, density, and/or cost. In some embodiments, the fly ash may be present in the lightweight settable compositions of the present invention in an amount in the range of from 5% to 40% by weight of the lightweight settable composition. In some embodiments, the fly ash may be present in the lightweight settable compositions according to the method of the present invention in an amount in the range of from 7% to 30% by weight of the lightweight settable composition.

In some embodiments, a slag cement that may be suitable for use may comprise slag. "Slag," as that term is used herein, refers to a granulated, blast furnace byproduct formed in the production of cast iron and generally comprises the oxidized impurities found in iron ore. Slag generally does not contain sufficient basic material, so slag cement further may comprise a base to produce a settable composition that may react with water to set to form a hardened mass. Examples of suitable sources of bases include, but are not limited to, sodium hydroxide, sodium bicarbonate, sodium carbonate, lime, and combinations thereof.

Where present, the slag cement generally may be included in the lightweight settable compositions according to the method of the present invention in an amount sufficient to provide the desired compressive strength, density, and/or cost. In some embodiments, the slag cement may be present in the lightweight settable compositions according to the method of the present invention in an amount up to 60% by weight of the lightweight settable composition. In some embodiments, the slag cement may be present in the lightweight settable compositions according to the method of the present invention in an amount in the range of from 5% to 40% by weight of the lightweight settable composition.

In certain embodiments, the lightweight settable compositions according to the method of the present invention further may comprise metakaolin. Generally, metakaolin may be prepared by heating kaolin clay, for example, to temperatures in the range of from 600° C to 800°C. In some embodiments, the metakaolin may be present in the lightweight settable compositions according to the method of the present invention in an amount in the range of from 2.5% to 40% by weight of the lightweight settable composition. In some embodiments, the metakaolin may be present in an amount in the range of from 5% to 30% by weight of the lightweight settable composition.

In certain embodiments, the lightweight settable compositions according to the method of the present invention further may comprise vitrified shale. Among other things, vitrified shale included in the lightweight settable compositions may react with excess lime to form a suitable cementing material, for example, calcium silicate hydrate. A variety of vitrified shales are suitable, including those comprising silicon, aluminum, calcium, and/or magnesium. Suitable examples of vitrified shale include, but are not limited to, PRESSUR-SEAL^{®} FINE LCM material and PRESSUR-SEAL^{®} COARSE LCM material, which are commercially available from TXI Energy Services, Inc., Houston, Texas. Generally, the vitrified shale may have any particle size distribution as desired for a particular application. In certain embodiments, the vitrified shale may have a particle size distribution in the range of from 37 micrometers to 4,750 micrometers.

Where present, the vitrified shale may be included in the lightweight settable compositions according to the method of the present invention in an amount sufficient to provide the desired compressive strength, density, and/or cost. In some embodiments, the vitrified shale and necessary amount of lime for setting may be present in an amount up to 50% by weight of the lightweight settable composition. In some embodiments, the vitrified shale may be present in an amount in the range of from 5% to 30% by weight of the lightweight settable composition. One of ordinary skill in the art, with the benefit of this disclosure, will recognize the appropriate amount of the vitrified shale to include for a chosen application.

In certain embodiments, the lightweight settable compositions of the present invention further may comprise zeolite. Zeolites generally are porous alumino-silicate minerals that may be either a natural or synthetic material. Synthetic zeolites are based on the same type of structural cell as natural zeolites, and may comprise aluminosilicate hydrates. As used herein, the term "zeolite" refers to all natural and synthetic forms of zeolite. An example of a suitable source of zeolite is available from the C2C Zeolite Corporation of Calgary, Canada. In some embodiments, the zeolite may be present in the lightweight settable compositions of the present invention in an amount in the range of from 2.5% to 2.5% by weight of the lightweight settable composition.

In certain embodiments, the lightweight settable compositions according to the method of the present invention further may comprise a set retarding additive. Examples of suitable set retarding additives include, but are not limited to, ammonium, alkali metals, alkaline earth metals, metal salts of sulfoalkylated lignins, hydroxycarboxy acids, copolymers that comprise acrylic acid or maleic acid, and combinations thereof. One example of a suitable sulfoalkylate lignin comprises a sulfomethylated lignin. Suitable set retarding additives are disclosed in more detail in United States Patent No. Re. 31,190. Suitable set retarding additives are commercially available from Halliburton Energy Services, Inc. under the tradenames HR^{®} 4, HR^{®} 5, HR^{®} 7, HR^{®} 12, HR^{®} 15, HR^{®} 25, SCR™ 100, and SCR™ 500. Generally, where used, the set retarding additive may be included in the lightweight settable compositions according to the method of the present invention in an amount sufficient to provide the desired set retardation. In some embodiments, the set retarding additive may be present in an amount in the range of from 0.02% to 2.5% by weight of the lightweight settable composition.

Optionally, other additional additives may be added to the lightweight settable compositions according to the method of the present invention as deemed appropriate by one skilled in the art, with the benefit of this disclosure. Examples of such additives include, but are not limited to, accelerators, lost circulation materials, filtration control additives, dispersants, and combinations thereof. Suitable examples of these additives include crystalline silica compounds, amorphous silica, salts, fibers, calcined clays, combinations thereof and the like.

In certain embodiments, the lightweight settable compositions according to the method of the present invention may be foamed with a gas. These foamed embodiments may comprise water, CKD, microspheres, a gas, and a surfactant. Other suitable additives, such as those discussed previously, also may be included in the foamed lightweight settable compositions according to the method of the present invention as desired by those of ordinary skill in the art, with the benefit of this disclosure. The gas used in the foamed lightweight settable compositions according to the method of the present invention may be any gas suitable for foaming a settable composition, including, but not limited to, air, nitrogen, or combinations thereof. Generally, the gas should be present in the foamed lightweight settable compositions according to the method of the present invention in an amount sufficient to form the desired foam. In certain embodiments, the gas may be present in the foamed lightweight settable compositions according to the method of the present invention in an amount in the range of from 10% to 80% by volume of the composition.

Generally, the surfactant may be present in the foamed lightweight settable compositions according to the method of the present invention in an amount sufficient to provide a suitable foam. In some embodiments, the surfactant may be present in an amount in the range of from 0.5% and 5% by volume of the water ("bvow").

The lightweight settable compositions described above are used for primary cementing.

A method is described that comprises providing a lightweight settable composition of the present invention having a density of less than 13 ppg [about 1560 kg/m³], the lightweight settable composition comprising water, CKD, and microspheres, placing the lightweight settable composition in a location to be cemented, and allowing the lightweight settable composition to set therein. The location to be cemented is a subterranean formation, for example, in subterranean applications. As desired by one of ordinary skill in the art, with the benefit of this disclosure, the lightweight settable compositions of the present invention useful in this method further may comprise any of the above-listed additives, as well any of a variety of other additives suitable for use in subterranean applications.

The method of the present invention is a method of primary cementing. The method comprises providing a lightweight settable composition of the present invention having a density of less than 13 ppg [about 1560 kg/m³], the lightweight settable composition comprising water, CKD, and microspheres wherein the microspheres are present in the lightweight settable composition in an amount in the range of from 1% to 30% by weight of the lightweight settable composition; introducing the lightweight settable composition into an annulus between a subterranean formation and a pipe string located in the subterranean formation; and allowing the lightweight settable composition to set in the annulus. Generally, in most instances, the lightweight settable composition should set into hardened mass that fixes the pipe string to the subterranean formation. As desired by one of ordinary skill in the art, with the benefit of this disclosure, the lightweight settable compositions of the present invention useful in this method further may comprise any of the above-listed additives, as well any of a variety of other additives suitable for use in subterranean application.

To facilitate a better understanding of the present invention, the following examples of certain aspects of some embodiments are given. In no way should the following examples be read to limit, or define, the scope of the invention. They serve to illustrate suitable compositions for use in the method of the present invention.

### EXAMPLE 1

A series of sample settable compositions were prepared at room temperature and subjected to 96-hour compressive strength tests at 120°F [48.9°C] in accordance with API Specification 10. The sample compositions comprised microspheres (3M^{™} SCOTCHLITE^{™} glass bubbles), and Class C Portland cement or Class A CKD in the amounts indicated in the table below. Sample No. 1 additionally comprised water (200% bwoc), SILICALITE^{™} cement additive (17.8% bwoc), CAL-SEAL^{®} calcined gypsum plaster (8.9% bwoc), and MICRO MATRIX^{®} cement (17.8% bwoc). Sample No. 2 additionally comprised water (257.14% bwoc), SILICALITE^{™} cement additive (28.6% bwoc), CAL-SEAL^{®} calcined gypsum plaster (17.1% bwoc), and MICRO MATRIX^{®} cement (28.6% bwoc). In these examples, "bwoc" refers to by weight of cement, wherein the cement is the Portland cement and/or CKD included in the sample composition. SILICALITE^{™} cement additive is an amorphous silica powder commercially available from Halliburton Energy Services, Inc. CAL-SEAL^{®} calcined gypsum plaster is commercially available from U.S. Gypsum Company. MICRO MATRIX^{®} cement is a fine hydraulic cement, commercially available from Halliburton Energy Services, Inc.

The results of the compressive strength tests are set forth in the table below.

**TABLE 1**

| **Compressive Strength Tests** | | | | | | |
|---|---|---|---|---|---|---|
| **Sample** | **Density (ppg)** | **Portland Cement Class C** | **CKD Class A** | **SCOTCH-LITE™ Glass Bubbles K25¹** | **SCOTCH-LITE™ Glass Bubbles S32²** | **96-Hour Compressive Strength at 120°F [48.9°C]** |
| | **[kg/m³]** | **(% bwoc)** | **(% bwoc)** | **(% bwoc)** | **(% bwoc)** | **(psi) [kPa]** |
| * No. 1 | 7.6 [911] | 100 | 0 | 20 | 35.5 | 822 [5667] |
| No. 2 | 7.67 [919] | 0 | 100 | 22.9 | 40 | 509 [3509] |

| | | | | | | |
|---|---|---|---|---|---|---|
| ¹ 3M^{™} SCOTCHLITE^{™} glass bubbles K25 have a density of 2.086 ppg (0.25 g/cc). ² 3M^{™} SCOTCHLITE^{™} Glass Bubbles S32 have a density of 2.671 ppg (0.32 g/cc). * outside the scope of the claim | | | | | | |

### EXAMPLE 2

A series of sample settable compositions were prepared at room temperature and subjected to 24-hour compressive strength tests at 100°F [37.8°C] in accordance with API Specification 10. The sample compositions comprised microspheres (3M^{™} SCOTCHLITE^{™} glass bubbles), Class C Portland cement, and Class A CKD in the amounts indicated in Table 2 below. Each of the sample compositions also comprised water (180% bwoc), SILICALITE^{™} cement additive (8% bwoc), CAL-SEAL^{®} calcined gypsum plaster (4% bwoc), and MICRO MATRIX^{®} cement (12% bwoc).

The results of the compressive strength tests are set forth in the table below.

**TABLE 2**

| **Compressive Strength Tests** | | | | | | |
|---|---|---|---|---|---|---|
| **Sample** | **Density (ppg)** | **Portland Cement Class C** | **CKD Class A** | **SCOTCH-LITE™ Glass Bubbles K25** | **SCOTCH-LITE™ Glass Bubbles S32** | **24-Hour Compressive Strength at 100°F [48.9°C]** |
| | **[kg/m³]** | **(% bwoc)** | **(% bwoc)** | **(% bwoc)** | **(% bwoc)** | **(psi) [kPa]** |
| *No. 3 | 7.53 [902] | 100 | 0 | 18 | 32 | 137 [944.6] |
| No. 4 | 7.50 [899] | 70 | 30 | 18 | 32 | 136.5 [941.1] |
| No. 5 | 7.49 [897] | 60 | 40 | 18 | 32 | 102 [703.2] |

| | | | | | | |
|---|---|---|---|---|---|---|
| * outside the scope of the claim | | | | | | |

### EXAMPLE 3

A series of sample settable compositions were prepared at room temperature and subjected to 24-hour compressive strength tests at 100°F [37.8°C] and 140°F [60°C] in accordance with API Specification 10. The sample compositions comprised microspheres (3M^{™} SCOTCHLITE^{™} glass bubbles), Class G CKD, and Class G Portland cement in the amounts indicated in the table below. Each of the sample compositions also comprised water (86.47% bwoc), SILICALITE^{™} cement additive (4% bwoc), CAL-SEAL^{®} calcined gypsum plaster (2% bwoc), and MICRO MATRIX^{®} cement (6% bwoc).

The results of the compressive strength tests are set forth in the table below.

**TABLE 3**

| **Compressive Strength Tests** | | | | | | |
|---|---|---|---|---|---|---|
| **Sample** | **Density (ppg)** | **Cement Class G** | **CKD Class G** | **SCOTCH-LITE™ Bead K25** | **24-Hour Compressive Strength at 100°F [37.8°C]** | **24-Hour Compressive Strength at 140°F [60°C]** |
| | **[kg/m³]** | **(% bwoc)** | **(% bwoc)** | **(% bwoc)** | **(psi) [kPa]** | **(psi) [kPa]** |
| * No. 6 | 7.50 [899] | 100 | 0 | 20 | 150 [1034] | 250 [1724] |
| No. 7 | 7.50 [899] | 70 | 30 | 20 | 85 [586.1] | 238 [1641] |
| No. 8 | 7.50 [899] | 0 | 100 | 20 | 19 [131] | 115 [792.9] |

| | | | | | | |
|---|---|---|---|---|---|---|
| * outside the scope of the claim | | | | | | |

### EXAMPLE 4

A series of sample settable compositions were prepared at room temperature and subjected to 96-hour compressive strength tests at 140°F [60°C] and 160°F [71.1°C] in accordance with API Specification 10. The sample compositions comprised microspheres (3M^{™} SCOTCHLITE^{™} glass bubbles) and Class H CKD. Each of the sample compositions also comprised water, hydrated lime, vitrified shale (PRESSUR-SEAL^{®} FINE LCM material), and CFR^{™}-3 cement dispersant. CFR^{™}-3 cement dispersant is commercially available from Halliburton Energy Services, Inc.

The results of the compressive strength tests are set forth in the table below.

**TABLE 4**

| **Compressive Strength Tests** | | | | | | | | | |
|---|---|---|---|---|---|---|---|---|---|
| **Sample** | **Density (ppg)** | **CKD Class H** | **Water** | **Hydrated Lime** | **Pressure Seal** | **CFR-3** | **SCOTCH-LITE™ Glass Bubbles S32** | **96-Hour Compressive Strength at 140°F [60°C]** | **96-Hour Compressive Strength at 160°F [71.1°C]** |
| | **[kg/m³]** | **(% bwoc)** | **(% bwoc)** | **(% bwoc)** | **(% bwoc)** | **(% bwoc)** | **(% bwoc)** | **(psi) [kPa]** | **(psi) [kPa]** |
| No. 9 | 7.96 [954] | 100 | 228.6 | 19 | 100 | 0 | 76.2 | 502 [3461] | 543 [3744] |
| No. 10 | 8.01 [960] | 100 | 228.6 | 9.5 | 0 | 0.28 | 38.1 | 305 [2103] | 323 [2227] |
| No. 11 | 8.85 [1060] | 100 | 80 | 0 | 0 | 0.75 | 25 | 407 [2806] | 483 [3330] |

Accordingly, Examples 1-4 indicate that settable compositions comprising hydraulic cement, CKD, and microspheres may have suitable compressive strengths for the method of the present invention.

Therefore, the present invention is well adapted to attain the ends and advantages mentioned as well as those that are inherent therein. It will be appreciated that the invention may be modified within the scope of the appended claim. The terms in the claim have their plain, ordinary meaning unless otherwise explicitly and clearly defined by the patentee.

## Claims

1. A method of primary cementing a subterranean formation comprising:
providing a lightweight settable composition having a density less than 13 pounds per gallon [1 560 kg/m³], the lightweight settable composition comprising water, cement kiln dust, and microspheres, wherein the microspheres are present in the lightweight settable composition in an amount in the range of from 1% to 30% by weight of the lightweight settable composition;
introducing the lightweight settable composition into an annulus between the subterranean formation and a pipe string located in the subterranean formation; and
allowing the lightweight settable composition to set in the annulus.

## Patentansprüche

1. Verfahren zum primären Zementieren einer unterirdischen Formation, umfassend:
Bereitstellen einer leichten härtbaren Zusammensetzung mit einer Dichte von weniger als 13 Pfund pro Gallone [1560 kg/m³], wobei die leichte härtbare Zusammensetzung Wasser, Zementofenstaub und Mihrokugeln umfasst, wobei die Mikrokugeln in der leichten härtbaren Zusammensetzung in einer Menge im Bereich von 1 % bis 30 % nach Gewicht der leichten härtbaren Zusammensetzung vorhanden sind;
Einleiten der leichten härtbaren Zusammensetzung in einen Ringraum zwischen der unterirdischen Formation und einem Rohrstrang, der in der unterirdischen Formation angeordnet ist; und
Aushärten der leichten härtbaren Zusammensetzung in dem Ringraum.

## Revendications

1. Procédé de cémentation primaire d'une formation souterraine comprenant :
l'utilisation d'une composition légère durcissable présentant une densité inférieure à 13 livres par gallon [1 560 kg/m³], la composition légère durcissable contenant de l'eau, de la poussière de four à ciment et des microsphères, les microsphères étant présentes dans la composition légère durcissable à hauteur de 1 à 30 % en poids de la composition légère durcissable ;
l'introduction de la composition légère durcissable dans un espace annulaire entre la formation souterraine et un train de tiges situé dans la formation souterraine ; et
le fait de laisser la composition légère durcissable durcir dans l'espace annulaire.
